# EUROPÄISCHE PATENTSCHRIFT

(11) **EP 2 828 036 B1**
(45) Veröffentlichungstag und Bekanntmachung des Hinweises auf die Patenterteilung: **25.05.2016**
(21) Anmeldenummer: 13713146.2
(22) Anmeldetag: 25.03.2013
(51) Int. Cl.: B24B 39/00, B24B 49/14, B23P 9/02, C21D 9/00, C21D 1/09

(54) **VORRICHTUNG UND VERFAHREN ZUM ELEKTROMECHANISCH UNTERSTÜTZTEN GLATTWALZEN**
DEVICE AND METHOD FOR ELECTROMECHANICALLY-ASSISTED ROLLER BURNISHING
DISPOSITIF ET PROCÉDÉ DESTINÉS AU GALETAGE À ASSISTANCE ÉLECTROMÉCANIQUE

(30) Priorität: 23.03.2012 DE 102012006471
(43) Veröffentlichungstag der Anmeldung: 28.01.2015
(73) Patentinhaber: Fraunhofer Gesellschaft zur Förderung der angewandten Forschung e.V., 80686 München (DE); Technische Universität Berlin, 10623 Berlin (DE)
(72) Erfinder: HÜNING, Holger, 13189 Berlin (DE); KÖNIG, Jens, 33699 Bielefeld (DE); UHLMANN, Eckart, 25368 Kiebitzreihe (DE); KÖNIG, Christoph, 10287 Berlin (DE)
(74) Vertreter: Pfenning, Meinig & Partner mbB
(86) Internationale Anmeldenummer: PCT/EP2013/056316
(87) Internationale Veröffentlichungsnummer: WO 2013/139998

(56) Entgegenhaltungen:
- DE-A1- 3 142 270
- DE-A1-102004 058 146
- DE-A1-102005 041 250

## Beschreibung

Die vorliegende Patentanmeldung betrifft eine Vorrichtung zum elektromechanisch unterstützten Glattwalzen sowie ein entsprechendes Verfahren zum elektromechanisch unterstützten Glattwalzen.

Mechanisches Glattwalzen als Nachbearbeitungsprozess an Drehteilen gehört bereits zum Stand der Technik. Glattwalzen dient vorwiegend zur Verbesserung der Oberflächengüte, entweder als Außen- oder als Innenbearbeitung nach vorheriger, meist mechanischer Bearbeitung. Durch diesen Umformprozess lassen sich geringere Rautiefen und höhere Traganteile erreichen, die Werkstoffhärte kann an den Außenflächen gesteigert werden.

Oberflächenrauheiten werden beim Glattwalzen geglättet, indem Material der Rauheitsspitzen mittels eines oder mehrerer Glattwalzelemente (in Form von Rollen, Scheiben oder Kugeln) in die zwischen den Bearbeitungsriefen liegenden Täler gedrückt und eingeebnet wird. Das Einebnen des Oberflächenprofils erfolgt durch das Fließen des Materials in die Täler. Durch die dadurch bedingte Anhebung des Grundes wird ein gleichmäßiges Flächenniveau erreicht. Die Glattwalzelemente sind gehärtet und weisen meist eine hohe Oberflächengüte auf. Sie werden entweder als Walzen, Scheiben oder Kugeln in einem Werkzeugträger verwendet.

Abhängig von den relevanten Bearbeitungsparametern Vorschub, Zustelltiefe bzw. Walzkraft und Umfangsgeschwindigkeit des drehenden Werkstückes sowie der Rollengeometrie treten durch den Kaltumformprozess des Glattwalzens lokale Festigkeitssteigerungen oberflächennaher Schichten auf. Durch die Glättung der Oberfläche werden Mikrokerben beseitigt. Für die Art der Kaltumformverfahren sind spanend bearbeitete Werkstücke und duktile Werkstoffe die Voraussetzung.

Eine Verfahrensvariante ist das elektromechanisch unterstützte Glattwalzen (EMG), bei dem die Oberfläche eines Rundkörpers mittels mehrerer Glattwalzkörper unter gleichzeitigem Wärmeeinfluss mechanisch eingedrückt und verfestigt wird. Hohe Temperaturen an der Wirkstelle werden durch hohe Stromstärken und geringe Spannungen direkt an der Kontaktstelle zwischen den Oberflächen des Werkstückes und Werkzeug realisiert. Durch den Wärmeeintrag und nachfolgende Abkühlung werden Gefügeänderungen hervorgerufen, mit der ein feinkörniges Gefüge in Form von Martensit mit Restaustenit erreicht wird. Die Folge ist eine Oberflächenhärtung.

Problematisch ist einerseits die Übertragung eines kontrollierten Wärmeeintrags über die Kontaktstelle auf die Bearbeitungszone, andererseits die werkstoffrelevante Abkühlzeit. Auch unterliegt die für hohe Stromstärken auf das Glattwalzelement erforderliche Kontaktierung einem mechanischen Verschleiß.

Die DE 10 2004 058 146 betrifft ein Verfahren zum Oberflächenverfestigen von Bauteilen, wobei zur Verfestigung einer Oberfläche eines Bauteils eine Relativbewegung bzw. Vorschubbewegung zwischen dem Bauteil und mindestens einem im Ultraschallfrequenzbereich angeregten, sonotrodenartigen Werkzeug etabliert wird. Erfindungsgemäß wird das oder jedes Werkzeug bei der Oberflächenverfestigung derart zu der zu verfestigenden Oberfläche des Bauteils ausgerichtet, dass eine in Wirkrichtung des jeweiligen Werkzeugs verlaufende Werkzeugachse schräg zu der zu verfestigenden Oberfläche des Bauteils verläuft.

Der vorliegenden Erfindung liegt daher die Aufgabe zugrunde, eine Vorrichtung bzw. ein Verfahren zu schaffen, bei dem bei geringem Werkzeugverschleiß eine bestmögliche Steuerung der Gefügeänderung sowie eine höchstmögliche Oberflächenqualität des Werkstücks erreicht werden.

Dies betrifft zunächst eine Vorrichtung zum elektromechanisch unterstützten Glattwalzen (EMG), wobei ein Glattwalzwerkzeug mit genau einem stromführenden Glattwalzelement zum Glätten eines Werkstücks gegeben ist und dieses Glattwalzelement ein erstes elektrisches Kontaktelement zur elektrischen Kontaktierung an einer ersten Stelle des Werkstücks aufweist und die Vorrichtung außerdem ein zweites elektrisches Kontaktelement zur elektrischen Kontaktierung an einer zweiten Stelle des Werkstücks aufweist, wobei das erste und das zweite elektrische Kontaktelement in einem vorzugsweise fest einstellbaren räumlichen Abstand zueinander positionierbar sind, so dass beim Bewegen des Glattwalzelements auf dem Werkstück ein Strompfad im Werkstück zwischen erstem und zweitem Kontaktelement stets gleich lang ist. Mit "fest einstellbar" ist im Zusammenhang mit dieser Patentanmeldung die Abgrenzung zu herkömmlichen, z.B. Drehmaschinen gemeint, bei denen mit zunehmendem Vorschub sich automatisch auch die Länge des Strompfads ändern würde, was nachteilig ist. Mit "fest" ist vielmehr gemeint, dass die Länge des Strompfads zwischen erstem und zweitem Kontaktelement im Wesentlichen gleich bleibt. Dies schließt etwaige Nachjustierungen während des Bearbeitungsvorgangs selbstverständlich nicht aus, die beispielsweise auf Verschleiß, Federwege oder auch durch die Bauteilkontur bedingt sein können (siehe unten).

Kurz gesagt wird durch den mitgeführten Stromanschluss (das zweite elektrische Kontaktelement) stets eine gleich bleibende Strompfadlänge im Werkstück realisiert. Im Wesentlichen wird nur ein einzelnes stromführendes Glattwalzelement unbedingt benötigt, welches sowohl für die benötigte Walzkraft als auch für den direkten Stromkontakt zwischen Glattwalzelement und Werkstück dienen kann (es kann aber auch weitere Glattwalzwerkzeuge geben, die allerdings dann nicht mit elektrischen Kontakten versehen sein sollten). Die Realisierung des elektrischen Stromflusses, und somit die Übertragung in die Bearbeitungszone, erfolgt zwischen diesem einzelnen Glattwalzelement und dem Werkstück, und der Strompfad äquidistanter Länge verläuft dann zum zweiten elektrischen Kontaktelement, das hierzu mit dem Werkstück kontaktiert ist. Es versteht sich von selbst, dass das Werkstück hierzu ausreichende elektrisch leitende Eigenschaften haben sollte; hier sind besonders Metalle bzw. Metalllegierungen im Werkstück vorgesehen.

Die Erfindung ist anwendbar in einer speziellen Gesamtvorrichtung zum elektromechanisch unterstützten Glattwalzen, welche sämtliche Komponenten (Drehantrieb, Einspannung für ein Glattwalzwerkzeug etc.) enthält.

Im Kontext der vorliegenden Anmeldung bedeutet "Werkzeugmaschine" beispielsweise eine Drehmaschine, ein Bearbeitungszentrum oder eine Fräsmaschine.

Es ist allerdings auch möglich, dass die zum Glattwalzen wichtigen Komponenten in einem Glattwalzwerkzeug vereint sind, das in eine Werkzeugaufnahme einer Werkzeugmaschine einspannbar ist. Auf diese Weise wird ermöglicht, dass eine bestehende Werkzeugmaschine kostengünstig zu einer Vorrichtung zur Durchführung des EMG umgerüstet werden kann. Hierbei ist es sogar möglich, eine Kontroll- und Steuereinrichtung in das nachzurüstende Glattwalzwerkzeug einzubauen, um so die entscheidenden Betriebsparameter (Spannung/Stromstärke/Temperatur und/oder Vorschubgeschwindigkeit sowie Zustelltiefe und Walzkraft der Maschine) koordinieren zu können und somit eine optimale Oberflächengüte bzw. die angestrebte Gefügeänderung zu erreichen.

Mit der vorliegenden Erfindung können vorzugsweise Werkstückoberflächen mit hohem Flächentraganteil durch geglättete und verfestigte Oberflächen sowie hohe Glanzqualitäten erreicht werden. Weiterhin ist das Härten von oberflächennahen Schichten gut möglich.

Außerdem kann das erfindungsgemäße Verfahren zur Herstellung von Gleitflächen, Dichtungsflächen, Fügeflächen an runden und ovalen Teilen sowie zum Glätten und Verfestigen von Radien, zylindrischen Außendurchmessern, Kegeln, Planflächen, Einstichen, Freistichen und Ähnlichem an Drehteilen und anderen Teilen angewandt werden. Weiterhin ist das Umformen von Wandungen an Hohlkörpern, die Realisierung hochwertiger Glanzflächenqualitäten auf metallischen Werkstoffen und Umformung von Hohlkörpern zur Realisierung von Verbindungen mehrerer Teile möglich.

Die größten Vorteile hat das erfindungsgemäße Verfahren sicherlich bei relativ langen Drehteilen, d. h. Drehteile, deren Gesamtlänge in Richtung der Drehachse bei Einspannung in die Drehmaschine mindestens 100 mm, vorzugsweise mindestens 150 mm beträgt.

Vorteilhafte Weiterbildungen der vorliegenden Erfindung werden in den abhängigen Ansprüchen beschrieben.

Eine vorteilhafte Weiterbildung sieht vor, dass das Glattwalzwerkzeug ausgebildet ist zum Glätten von planaren Flächen, Freiformflächen und/oder rotatorischen Flächen, wobei diese rotatorischen Flächen zu Werkstücken gehören können, die im Querschnitt im Wesentlichen rotationssymmetrisch oder oval sind. Das heißt, dass der Gedanke der vorliegenden Erfindung nicht auf rotationssymmetrische Anwendung beschränkt ist. Beispielsweise kann auch beim Glattwalzen einer planen Fläche mittels des mitgeführten zweiten elektrischen Kontaktelementes eine gute Oberflächengüte hergestellt werden.

Eine weitere vorteilhafte Weiterbildung sieht vor, dass die Vorrichtung eine erste Aufnahme für ein Werkstück und/oder eine zweite Aufnahme für ein Werkzeug (vorzugsweise eine Drehmeißelaufnahme) aufweist. Dieser Grundaufbau ist bei herkömmlichen Werkzeugmaschinen zu finden; in die Werkstückaufnahme kann hier ein längliches Bauteil eingespannt werden, und in die Drehmeißelaufnahme kann dann das Glattwalzwerkzeug eingespannt werden.

Eine weitere vorteilhafte Weiterbildung sieht vor, dass das erste und/oder zweite elektrische Kontaktelement eine Federhalterung zum federnden Halten des elektrischen Kontaktelements am Werkzeug aufweist, mittels dem jederzeit ein gleichmäßiger Anpressdruck und flächiger Kontakt des Kontaktelementes am Werkzeug gewährleistet ist, und/oder dass das erste und/oder zweite elektrische Kontaktelement als Rolle, Bürste oder Bauteil mit einer der Außenkontur des Werkstücks angepassten Ausnehmung geformt ist. Insbesondere durch die Federhalterung bzw. die Ausführung als Bürste wird hierbei besonders bei unrunden Teilen und/oder bei ursprünglich schlechter Oberflächenqualität ein gleich bleibender Stromfluss während der Bearbeitung ermöglicht. Außerdem ist selbst bei einem Verschleiß des Bauteils der Abstand zum Werkstück im Wesentlichen gleichbleibend, da sich diese federnden Teile immer wieder an die Werkstückgeometrie anpassen. Vorteilhaft ist außerdem bei Bürsten bzw. stromführenden Bauteilen, welche der Außenkontur des Werkstücks angepasst sind, dass die Stromdichte aufgrund der relativ großen Kontaktfläche klein gehalten werden kann und somit Lichtbögen bzw. lokal unnötig hohe Stromstärken vermieden werden können, da diese zu einem unerwünschten Verschleiß des elektrischen Kontaktes oder auch zu unerwünschten Gefügeänderungen im Werkstück führen können.

Eine weitere vorteilhafte Weiterbildung sieht vor, dass das Glattwalzelement eine Rolle zum Glattwalzen aufweist und ein Stromübertragungselement in Form einer Bürste und/oder eines Bauteils mit einer zu dieser Rolle komplementären Ausnehmung um die Umfangsfläche der Rolle gegeben ist. Selbstverständlich ist es auch möglich, zwei entsprechende stromführende Bauteile bzw. mehrere Bürsten vorzusehen, um die Kontaktfläche weiter zu erhöhen. Vorteilhaft hieran ist, dass die Stromeinleitung am Glattwalzelement direkt erfolgt und somit neben der dortigen mechanischen Beanspruchung des Werkstücks auch eine gezielte Wärmeeinleitung zur bestmöglichen Gefügeänderung erfolgt. Dadurch, dass vorzugsweise die mechanische Belastung nur an dieser Stelle erfolgt und das zweite elektrische Kontaktelement, das während der Bearbeitung in einem äquidistanten Abstand angeordnet ist, vorzugsweise keine zusätzliche mechanische Belastung darstellt, ist eine Regelung des EMG-Verfahrens besonders gut möglich. Wären beispielsweise zwei Glattwalzelemente vorgesehen, welche beide sowohl mechanisch als auch elektrisch belasten, wäre die Kontrolle/Steuerung deutlich komplexer, da durch Überlagerungen einzelner Einflüsse eine Koordinierung schwer möglich ist bzw. auch eine Überbeanspruchung des Werkstücks wahrscheinlich wird (Näheres hierzu weiter unten bei der Beschreibung der Steuer- und Kontrolleinrichtung).

Eine weitere vorteilhafte Weiterbildung sieht vor, dass das zweite elektrische Kontaktelement an einem Mitnehmer des Glattwalzwerkzeugs oder einem äquidistant mitgeführten Ausleger der Vorrichtung angeordnet ist. Das heißt, dass, wenn das zweite elektrische Kontaktelement an einem Mitnehmer des Glattwalzwerkzeugs befestigt ist, dieses zweite elektrische Kontaktelement dann Bestandteil des Glattwalzwerkzeugs ist, das somit in eine Drehmeißelaufnahme oder dergleichen eingesteckt werden kann. Alternativ dazu ist es auch möglich, einen hiervon unabhängigen Ausleger (beispielsweise an der Drehmaschine) vorzusehen, wobei zur Herstellung der Äquidistanz dann gegebenenfalls ein zweiter Antrieb nötig ist.

Vorteilhaft ist, dass der Abstand zwischen dem stromführenden Glattwalzelement und dem zweiten elektrischen Kontaktelement während des Verfahrens variiert werden kann, wenn für das Glattwalzwerkzeug und den zweiten elektrischen Kontakt unterschiedliche Vorschubmechanismen gewählt werden. Hierfür kann z. B. eine Werkzeugmaschine mit zwei Werkzeugträgern verwendet werden. So ließe sich der Abstand beider Kontakte über die Maschinensteuerung einstellen.

Eine weitere vorteilhafte Weiterbildung sieht vor, dass die erfindungsgemäße Vorrichtung eine Steuer- und Kontrolleinrichtung zur Regelung elektrischer Parameter wie z. B. der Spannung und/oder der Stromstärke des durch das Werkstück verlaufenden Strompfads aufweist (also zwischen erstem und zweitem elektrischem Kontaktelement). Die Steuer- und Kontrollvorrichtung kann hierbei eine Messeinrichtung zur Messung der Temperatur der Werkstückoberfläche aufweisen. Dies kann ein Berührsensor oder auch ein Sensor zur Messung der Strahlungswärme sein. Im Übrigen können auch andere Parameter gesteuert bzw. mit gemessen werden. Beispielsweise ist die Stärke der mechanischen Belastung des Glattwalzelementes auf das Werkstück ein relevanter Faktor, außerdem (insbesondere beim Bearbeiten von Drehteilen) die Vorschubgeschwindigkeit.

Es ist möglich, die Steuer- und Kontrolleinrichtung des Glattwalzwerkzeugs in die Gesamtsteuerung der Werkzeugmaschine zu integrieren und/oder über eine Schnittstelle mit dieser zu verbinden. Es ist erfindungsgemäß möglich, die Steuer- und Kontrolleinrichtung des Glattwalzwerkzeugs so auszuführen, dass diese im Maschinengehäuse der Drehmaschine untergebracht ist oder dass diese integral mit einem Glattwalzwerkzeug verbunden ist, das beispielsweise in eine Drehmeißelaufnahme einfügbar ist.

Weitere vorteilhafte Weiterbildungen werden in den übrigen abhängigen Ansprüchen beschrieben.

Die Erfindung wird nun anhand mehrerer Figuren erläutert. Es zeigen:
- Fig. 1: eine erfindungsgemäße EMG-Vorrichtung,
- Fig. 2: eine weitere Ausführungsform einer erfindungsgemäßen EMG-Vorrichtung, bei der das zweite elektrische Kontaktelement anders ausgeführt als nach Fig. 1, sowie
- Fig. 3: eine weitere Ausführungsform einer erfindungsgemäßen EMG-Vorrichtung.

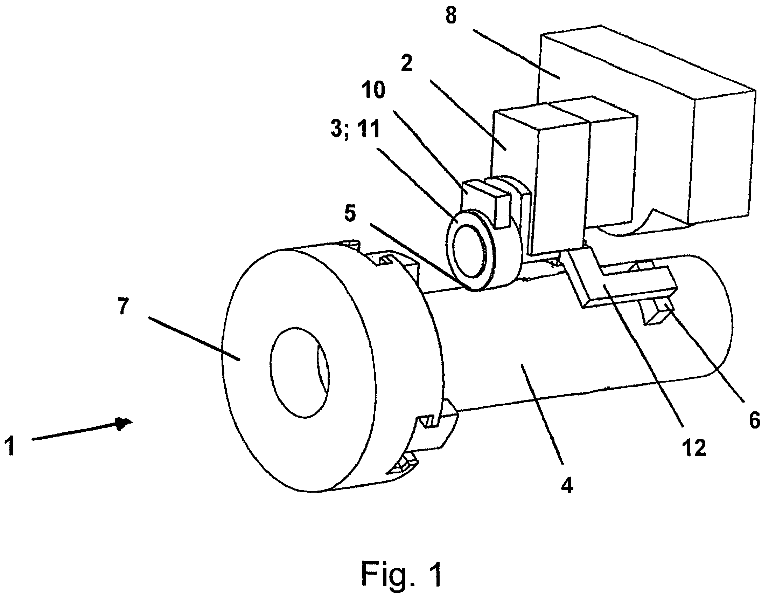

**Figur 1** zeigt eine erfindungsgemäße Vorrichtung zum elektromechanisch unterstützten Glattwalzen.

Der Aufbau der in Fig. 1 gezeigten Vorrichtung ist zunächst einmal der einer klassischen Drehmaschine bzw. einer entsprechenden Glattwalzvorrichtung. In eine erste Aufnahme 7 ist ein Werkstück 4 (ein längliches Drehteil) einspannbar. Die Aufnahme ist für Werkstücke unterschiedlicher Durchmesser durch eine entsprechende Einspannung verstellbar, um diese drehfest in der Aufnahme zu verankern und dann eine geregelte Drehbewegung um die Längsachse des Werkstücks 4 zu erreichen.

In einer zweiten Aufnahme, einer Werkzeugaufnahme 8, ist ein Glattwalzwerkzeug 2 eingespannt. Diese Werkzeugaufnahme ist so ausgeführt, dass hier auch ein Drehmeißel oder dergleichen einspannbar ist.

Im Folgenden wird detailliert auf das Glattwalzwerkzeug 2 eingegangen, das komplett (d. h. einschließlich Mitnehmer 12 und zweitem elektrischem Kontaktelement 6) nachrüstbar ist, d. h. in die Werkzeugaufnahme einer bekannten Drehmaschine einspannbar ist. Hierbei ist es sogar möglich, in das Glattwalzwerkzeug 2 hinein eine Steuer- und Kontrollvorrichtung zu integrieren (im Bild nicht gezeigt), die auch noch Sensoren zur Messung der Stromstärke und/oder der Temperatur enthalten kann. Das Glattwalzwerkzeug 2 ist sowohl in Längsrichtung des Werkstücks 4 bewegbar (Vorschub; dieser Vorschub kann auch mit unterschiedlicher Geschwindigkeit eingestellt werden) als auch im radialen Abstand zum Werkstück 4 (hierdurch kann dann der Druck des Glattwalzelements 3 auf das Werkstück geregelt werden). Das Glattwalzelement 3 rollt mit seiner Umfangsfläche auf der Umfangsfläche des Werkstücks 4 ab; durch diese Druckaufbringung kommt es zu Oberflächenveränderungen bzw. Gefügeänderungen im Werkstück. Um diesen Vorgang zu unterstützen, erfolgt zusätzlich eine Beeinflussung/Erwärmung des Werkstücks im zu bearbeitenden Bereich durch elektrischen Strom. Hierzu ist ein Stromübertragungselement 10 vorgesehen, das als Bauteil ausgeführt ist, dessen Geometrie komplementär zum Außenumfang der Rolle 11 (des Glattwalzelementes 3) ausgeführt ist. Alternativ sind hier auch Bürsten oder auch Rollen möglich; es ist auch möglich, mehrere Stromübertragungselemente vorzusehen. Die Rolle 11 (das Glattwalzelement 3) ist zumindest an seinem Außenumfang elektrisch leitend, so dass über das Stromübertragungselement 10 elektrischer Strom zu einem ersten elektrischen Kontaktelement (d. h. der Rolle 11 selbst, vor allem an der Kontaktstelle zu dem Werkstück 4) gegeben ist. Das Glattwalzwerkzeug 2 hat außerdem einen Mitnehmer 12, an dessen Ende ein zweites elektrisches Kontaktelement 6 vorgesehen ist. Dieses hat vorliegend eine zum Außenumfang des Werkstücks 4 komplementäre Form. Es wäre allerdings auch möglich, hier eine Bürstenanordnung zu wählen; nicht gezeigt ist außerdem, dass der Mitnehmer 12 so gefedert ist, dass das zweite elektrische Kontaktelement sanft auf die Oberfläche des Werkstücks 4 gepresst wird. Dieser Druck soll lediglich sicherstellen, dass der elektrische Kontakt gegeben ist; es soll keine Gefügeänderung hierdurch bewirkt werden. Es ist allerdings nicht ausgeschlossen, dass ein zweites Glattwalzelement vorgesehen wird; dieses sollte allerdings dann nicht auch noch stromführend sein, da dies die Regelung des EMG-Vorgangs erschweren könnte.

Durch den Mitnehmer 12, der fest an dem Glattwalzwerkzeug 2 angebracht ist, wird somit sichergestellt, dass der Abstand in Längsrichtung des Werkstücks, der zwischen erstem elektrischem Kontaktelement 5 und zweitem elektrischem Kontaktelement 6 besteht, immer gleich ist, unabhängig von dem Vorschub der Werkzeugaufnahme oder des Glattwalzwerkzeugs 2.

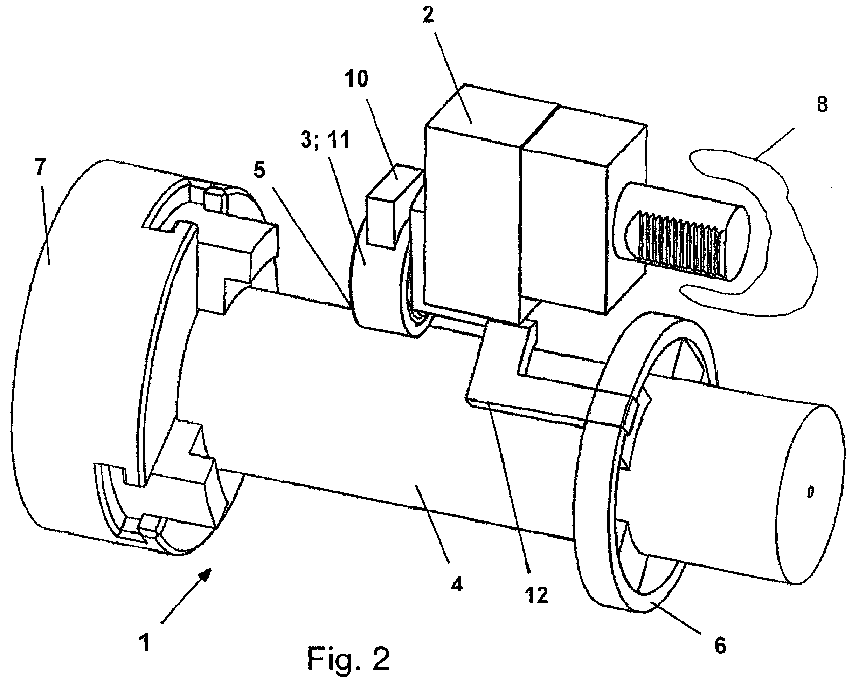

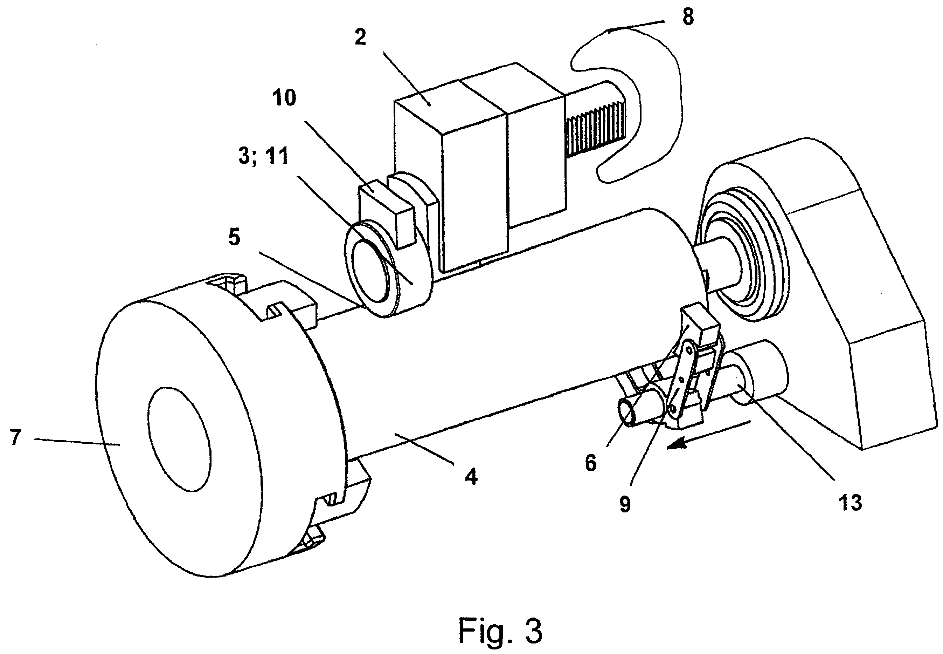

**Figuren 2** **und** **3** zeigen eine leicht geänderte Ausführungsform der Vorrichtung nach Fig. 1 (in den Fign. 2 und 3 ist die "zweite Aufnahme 8" lediglich schematisch dargestellt). Soweit nicht explizit im Folgenden auf Unterschiede eingegangen wird, gilt auch hier das zu Fig. 1 Beschriebene.

Der Hauptunterschied bei Fig. 2 gegenüber Fig. 1 besteht darin, dass die Form des zweiten elektrischen Kontaktelementes 6 leicht abweichend ist. Hier ist am Mitnehmer 12 ein im Wesentlichen ringförmiger Halter vorgesehen, innerhalb dessen ein großflächiges zweites elektrisches Kontaktelement oder auch mehrere dieser am Umfang verteilt vorgesehen sind. Bei der dargestellten umlaufenden Anordnung mehrerer Kontaktelemente und deren federnd nachgiebig zum Werkstück positionierten Kontaktflächen ergibt sich der Vorteil einer selbstzentrierenden Kontaktelement-Baugruppe, wodurch ein gleichmäßiger Flächendruck zwischen den Kontaktelementen und dem Werkstück gewährleistet wird. Auch hier ist allerdings während des gesamten Bearbeitungsvorgangs der Abstand zwischen dem ersten elektrischen Kontaktelement 5 und dem zweiten elektrischen Kontaktelement 6 in Längsrichtung des Werkstücks 4 gleich bleibend. Für diesen Fall reduziert sich die Aufgabe des Mitnehmers hauptsächlich auf die Realisierung der axialen Positionierung und Mitführung der Kontaktelemente.

Fig. 3 zeigt eine weitere Ausführungsform, bei der das Glattwalzwerkzeug 2 allerdings zwei Stromübertragungselemente 10 aufweist, welche jeweils mit Federhalterungen 9 an das Glattwalzelement 3 bzw. die Rolle 11 angepresst werden. Außerdem ist das zweite elektrische Kontaktelement 6 nicht unmittelbar an dem Glattwalzwerkzeug 2 befestigt, sondern an einem davon unabhängigen Ausleger 13. An diesem Ausleger 13 ist dann wiederum das zweite elektrische Kontaktelement federgelagert angebracht, wobei dieses zweite elektrische Kontaktelement aus einem oder mehreren Bestandteilen bestehen kann, die am Umfang des Werkstücks 4 angreifen. Der Ausleger 13 weist einen nicht näher dargestellten Antrieb zum Vorschub in axialer Werkstückrichtung parallel zum Glattwalzwerkzeug (siehe Pfeil in Fig. 3 neben dem Ausleger 13) auf. Die Vorschubgeschwindigkeit des Auslegers 13 entspricht vorzugsweise der Vorschubgeschwindigkeit des Glattwalzwerkzeugs 2; es kann allerdings auch vorgesehen werden, dass diese Vorschubgeschwindigkeit gezielt verändert wird, um den EMG-Vorgang bewusst zu beeinflussen. Zum Beispiel wäre dieses bei Durchmesser-Variationen wie Kegeln, kurvigen Drehteilkonturen in Längsrichtung und ähnlichem denkbar. Durch den separat steuerbaren Antrieb des Auslegers 13 könnten abweichende Strompfadlängen ausgeglichen und eine konstante Leistung in der Bearbeitungszone gewährleistet werden.

### Bezugszeichenliste:

- 1: Vorrichtung zum elektromechanisch unterstützten Glattwalzen
- 2: Glattwalzwerkzeug
- 3: Glattwalzelement
- 4: Werkstück
- 5: erstes elektrisches Kontaktelement
- 6: zweites elektrisches Kontaktelement
- 7: erste Aufnahme (für Werkstück)
- 8: zweite Aufnahme (für Drehmeißel)
- 9: Federhalterung
- 10: Stromübertragungselement
- 11: Rolle
- 12: Mitnehmer
- 13: Ausleger

## Patentansprüche

1. Vorrichtung (1) zum elektromechanisch unterstützten Glattwalzen (EMG), **dadurch gekennzeichnet, dass** ein Glattwalzwerkzeug (2) mit genau einem stromführenden Glattwalzelement (3) zum Glätten eines Werkstücks (4) gegeben ist und dieses Glattwalzelement ein erstes elektrisches Kontaktelement (5) zur elektrischen Kontaktierung an einer ersten Stelle des Werkstücks darstellt und die Vorrichtung außerdem ein zweites elektrisches Kontaktelement (6) zur elektrischen Kontaktierung an einer zweiten Stelle des Werkstücks aufweist, wobei das erste und das zweite elektrische Kontaktelement in einem einstellbaren räumlichen Abstand zueinander positionierbar sind, so dass beim Bewegen des Glattwalzelements auf dem Werkstück ein Strompfad im Werkstück zwischen erstem und zweitem Kontaktelement stets gleich lang ist.

2. Vorrichtung nach Anspruch 1, **dadurch gekennzeichnet, dass** das Glattwalzwerkzeug ausgebildet ist zum Glätten von planaren Flächen, von Freiformflächen und/oder von runden Flächen, wobei diese runden Flächen zu Werkstücken gehören, die im Querschnitt im Wesentlichen rotationssymmetrisch oder oval sind.

3. Vorrichtung nach einem der vorhergehenden Ansprüche, **dadurch gekennzeichnet, dass** die Vorrichtung eine Werkzeugmaschine, vorzugsweise eine Drehmaschine ist.

4. Vorrichtung nach Anspruch 3, **dadurch gekennzeichnet, dass** die Vorrichtung eine erste Aufnahme (7) für ein Werkstück (4) und/oder eine zweite Aufnahme (8) für ein Bearbeitungswerkzeug wie z.B. einen Drehmeißel oder dergleichen aufweist.

5. Vorrichtung nach einem der vorhergehenden Ansprüche, **dadurch gekennzeichnet, dass** das erste (5) und/oder zweite (6) elektrische Kontaktelement eine nachgiebige Halterung mit einem Positionierelement (9) aufweist zum federnden Halten des Kontaktelements am Werkstück und/oder dass das erste und/oder zweite elektrische Kontaktelement als Rolle, Bürste oder Bauteil mit einer der Außenkontur des Werkstücks (4) angepassten Ausnehmung ausgebildet ist.

6. Vorrichtung nach einem der vorhergehenden Ansprüche, **dadurch gekennzeichnet, dass** das Glattwalzelement (2) eine Rolle oder eine Scheibe (11) aufweist und ein Stromübertragungselement (10) in Form einer oder mehrerer Bürsten und/oder eines oder mehrerer Bauteile mit zur Rolle komplementären Ausnehmung an der Umfangsfläche der Rolle kontaktiert ist.

7. Vorrichtung nach einem der vorhergehenden Ansprüche, **dadurch gekennzeichnet, dass** das zweite elektrische Kontaktelement (6) an einem Mitnehmer (12) des Glattwalzwerkzeugs (2) oder an einem äquidistant mitgeführten Ausleger (13) der Vorrichtung angeordnet ist.

8. Vorrichtung nach einem der vorhergehenden Ansprüche, **dadurch gekennzeichnet, dass** die Vorrichtung eine Steuer- und Kontrolleinrichtung aufweist zur Regelung der Spannung und der Stromstärke des durch das Werkstück verlaufenden Strompfads zwischen erstem (5) und zweitem (6) elektrischen Kontaktelement, wobei vorzugsweise die Steuer- und Kontrolleinrichtung einen Messeinrichtung zur Messung der Temperatur der Werkstückoberfläche aufweist.

9. Vorrichtung nach einem der vorhergehenden Ansprüche, **dadurch gekennzeichnet, dass** das Glattwalzwerkzeug zum Einspannen in eine Drehmeißelaufnahme (8) einer Drehmaschine, oder eines Dreh- und Fräszentrums ausgebildet ist, wobei das Glattwalzwerkzeug vorzugsweise weiterhin eine Steuer- und Kontrolleinrichtung zur Regelung der Spannung und/oder der Stromstärke des durch das Werkstück verlaufendes Strompfads zwischen erstem (5) und zweitem (6) elektrischem Kontaktelement aufweist, wobei vorzugsweise die Steuer- und Kontrolleinrichtung eine Messeinrichtung zur Messung der Temperatur der Werkstückoberfläche aufweist.

10. Verfahren zum Glattwalzen von Oberflächen eines Werkstücks, wobei genau ein stromführendes Glattwalzelement zum Glattwalzen sowie ein hiervon beabstandetes gesondertes elektrisches Kontaktelement verwendet werden und beim Bewegen des Glattwalzelements auf der Werkstückoberfläche das elektrische Kontaktelement so nachgeführt wird, dass während eines Glattwalzens ein Strompfad konstanter Länge durch das Werkstück geleitet wird.

## Claims

1. A device (1) for the electromechanically assisted roller burnishing (EMRB), **characterised in that** a roller burnishing tool (2) with exactly one current-leading roller burnishing element (3) is given for burnishing a workpiece (4), and this roller burnishing element represents a first electrical contact element (5) for the electrical contacting on a first location of the workpiece, and the device moreover comprises a second electrical contact element (6) for the electrical contacting on a second location of the workpiece, wherein the first and the second electrical contact element can be positioned at a settable spatial distance to one another, so that on moving the roller burnishing element on the workpiece, a current path in the workpiece between the first and the second contact element is always equally long.

2. A device according to claim 1, **characterised in that** the roller burnishing tool is designed for burnishing planar surfaces, free-shaped surfaces and/or round surfaces, wherein these round surfaces belong to workpieces which in cross section are essentially rotationally symmetrical or oval.

3. A device according to one of the preceding claims, **characterised in that** the device is a machine tool, preferably a lathe.

4. A device according to claim 3, **characterised in that** the device comprises a first receiver (7) for a workpiece (4) and/or a second receiver (8) for a machining tool such as a lathe tool or likewise.

5. A device according to one of the preceding claims, **characterised in that** the first (5) and/or the second (6) electrical contact element comprises a yielding holder with a positioning element (9) for the resilient holding of the contact element on the workpiece and/or that the first and/or the second electrical contact element is designed as a roller, brush or component with a recess which is adapted to the outer contour of the workpiece (4).

6. A device according to one of the preceding claims, **characterised in that** the first electrical contact element (5) is given by the roller burnishing element (2) itself, wherein the roller burnishing element (2) comprises a roller or a disk (11), and a current transmission element (10) in the form of one or more brushes and/or one or more components with a recess complementary to the roller is contacted on the peripheral surface of the roller.

7. A device according to one of the preceding claims, **characterised in that** the second electrical contact element (6) is arranged on a dog (12) of the roller burnishing tool (2) or on an equidistantly co-led arm (3) of the device.

8. A device according to one of the preceding claims, **characterised in that** the device comprises a control and regulation device for the closed-loop control of the voltage and the current strength of the current path which runs through the workpiece and is between the first (5) and the second (6) electrical contact element, wherein preferably the control and regulation device comprises a measurement device for measuring the temperature of the workpiece surface.

9. A device according to one of the preceding claims, **characterised in that** the roller burnishing tool is designed for clamping into a lathe tool receiver (8) of a lathe, or of a lathe centre or milling centre, wherein this roller burnishing tool, wherein the roller burnishing tool preferably further comprises a control and regulation device for the control of the voltage and/or current strength of the current path which runs through the workpiece and is between the first (5) and the second (6) electrical contact element, wherein preferably the control and regulation device comprises a measurement device for measuring the temperature of the workpiece surface.

10. A method for roller burnishing surfaces of a workpiece, wherein exactly one current-leading roller burnishing element for roller burnishing, as well as a separate electrical contact element which is distanced to this are used, and on moving the roller burnishing element on the workpiece surface, the electrical contact element is led in a following manner such that a current path of a constant length is led through the workpiece during the roller burnishing.

## Revendications

1. Dispositif (1) destiné au galetage à assistance électromécanique (EMG), **caractérisé en ce qu'**un outil de galetage (2) est fourni avec précisément un élément de galetage (3) conducteur de courant pour le galetage d'une pièce (4), et cet élément de galetage constitue un premier élément de contact électrique (5) pour la mise en contact électrique sur un premier emplacement de la pièce, et le dispositif présente en outre un deuxième élément de contact électrique (6) pour la mise en contact électrique sur un deuxième emplacement de la pièce, le premier et le deuxième élément de contact électrique pouvant être positionnés avec un espacement spatial réglable l'un par rapport à l'autre de telle sorte que, lors du déplacement de l'élément de galetage sur la pièce, un trajet de courant dans la pièce est de longueur identique constante entre le premier et le deuxième élément de contact.

2. Dispositif selon la revendication 1, **caractérisé en ce que** l'outil de galetage est constitué pour le galetage de surfaces planes, de surfaces de forme libre et/ou de surfaces rondes, ces surfaces rondes faisant partie de pièces dont la section transversale est essentiellement symétrique en rotation ou ovale.

3. Dispositif selon l'une des revendications précédentes, **caractérisé en ce que** le dispositif est une machine-outil, de préférence un tour.

4. Dispositif selon la revendication 3, **caractérisé en ce que** le dispositif présente un premier logement (7) pour une pièce (4) et/ou un deuxième logement (8) pour un outil d'usinage comme par exemple un outil de tournage ou similaire.

5. Dispositif selon l'une des revendications précédentes, **caractérisé en ce que** le premier (5) et/ou le deuxième (6) élément de contact électrique présente une retenue souple avec un élément de positionnement (9) pour la retenue élastique de l'élément de contact sur la pièce et/ou **en ce que** le premier et/ou le deuxième élément de contact électrique est constitué en tant que rouleau, brosse ou composant avec un évidement adapté au contour extérieur de la pièce (4).

6. Dispositif selon l'une des revendications précédentes, **caractérisé en ce que** l'élément de galetage (2) présente un rouleau ou un disque (11), et **en ce qu'**un élément de transmission de courant (10) en forme de brosse ou de plusieurs brosses et/ou de composant ou de plusieurs composants est mis en contact avec un évidement complémentaire par rapport au rouleau sur la surface circonférentielle du rouleau.

7. Dispositif selon l'une des revendications précédentes, **caractérisé en ce que** le deuxième élément de contact électrique (6) est disposé sur un entraîneur (12) de l'outil de galetage (2) ou sur un bras mobile (13) du dispositif entraîné de façon équidistante.

8. Dispositif selon l'une des revendications précédentes, **caractérisé en ce que** le dispositif présente un équipement de commande et de contrôle pour la régulation de la tension et de l'intensité du trajet de courant, traversant la pièce, entre le premier (5) et le deuxième (6) élément de contact électrique, l'équipement de commande et de contrôle présentant de préférence un dispositif de mesure destiné à la mesure de la température de la surface de la pièce.

9. Dispositif selon l'une des revendications précédentes, **caractérisé en ce que** l'outil de galetage est constitué pour le serrage dans un logement d'outil de tournage (8) d'un tour ou d'un centre de tournage et de fraisage, l'outil de galetage présentant de préférence en outre un équipement de commande et de contrôle destiné à la régulation de la tension et/ou de l'intensité du trajet de courant, traversant la pièce, entre le premier (5) et le deuxième (6) élément de contact électrique, l'équipement de commande et de contrôle présentant de préférence un dispositif de mesure destiné à la mesure de la température de la surface de la pièce.

10. Procédé de galetage de surfaces d'une pièce, dans lequel un élément de galetage conducteur de courant est utilisé pour le galetage ainsi qu'un élément de contact électrique distinct qui en est espacé, et l'élément de contact électrique étant, lors du déplacement de l'élément de galetage sur la surface de la pièce, asservi de telle sorte que, pendant un galetage, un trajet de courant de longueur constante est guidé à travers la pièce.
